(19) Europäisches Patentamt
European Patent Office
Office européen des brevets

(11) Numéro de publication : **0 486 638 B1**

(12) # FASCICULE DE BREVET EUROPEEN

(45) Date de publication du fascicule du brevet : **27.12.95 Bulletin 95/52**

(51) Int. Cl.$^6$ : **G02B 1/04,** C08J 7/18, G02C 7/04

(21) Numéro de dépôt : **91910305.1**

(22) Date de dépôt : **13.05.91**

(86) Numéro de dépôt international : **PCT/FR91/00386**

(87) Numéro de publication internationale : **WO 91/18303 28.11.91 Gazette 91/27**

(54) **PROCEDE DE FABRICATION D'UNE LENTILLE EN POLYMERE TRANSPARENT A INDICE DE REFRACTION MODULE**

(30) Priorité : **11.05.90 FR 9005936**

(43) Date de publication de la demande : **27.05.92 Bulletin 92/22**

(45) Mention de la délivrance du brevet : **27.12.95 Bulletin 95/52**

(84) Etats contractants désignés : **BE CH DE ES FR GB IT LI NL SE**

(56) Documents cités :
**EP-A- 0 353 864**
**EP-A- 0 439 394**
**WO-A-90/13832**
**FR-A- 2 073 034**
**FR-A- 2 208 775**
**GB-A- 2 197 500**

(56) Documents cités :
**US-A- 3 809 732**
**US-A- 3 961 379**
**US-A- 3 993 485**
**US-A- 4 039 827**

(73) Titulaire : **ESSILOR INTERNATIONAL**
**1, rue Thomas Edison**
**F-94028 Créteil Cédex (FR)**

(72) Inventeur : **BAUDE, Dominique**
**1, allée du 8 mai 1945**
**F-93400 Saint-Ouen (FR)**
Inventeur : **LOUGNOT, Daniel**
**13, rue Fénelon**
**F-68200 Mulhouse (FR)**

(74) Mandataire : **Thibon-Littaye, Annick**
**11 rue de l'Etang**
**F-78160 Marly le Roi (FR)**

EP 0 486 638 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne les techniques qui permettent de modifier les propriétés optiques d'un polymère transparent, plus particulièrement quand on cherche à moduler l'indice de réfraction d'un article semi-fini en matière organique transparente préalablement polymérisée et mise en forme, sans modifier sensiblement sa géométrie ou son état de surface.

Dans ces conditions, une application privilégiée de l'invention concerne la fabrication des lentilles optiques artificielles de correction de la vue telles que les lentilles de contact et les implants oculaires, étant donné que dans ces exemples, la préservation d'une forme géométrique déterminée a une grande importance, de même que celles de qualités de surface assurant sur les deux faces de la lentille, la compatibilité biologique avec le milieu oculaire et l'absence d'irritation de l'oeil.

Le propre de telles lentilles est qu'elles sont d'une part de faibles dimensions et destinées à être utilisées en pleine ouverture, par distinction avec les verres de lunettes, d'autre part qu'elles doivent présenter une forme géométrique prédéterminée, qui par exemple, pour une lentille cornéenne, sera adaptée à la morphologie de l'oeil qui les reçoit, ou qui procurera une puissance d'accommodation de base pour un implant de remplacement du cristallin.

Dans ce genre de lentilles, la modulation d'indice de réfraction visée par l'invention peut avoir notamment pour but de conférer un profil de puissance asphérique à une lentille dont la puissance optique est initialement sphérique ou pour créer un réseau diffractif apportant la bifocalité à une lentille de contact ou un implant pour presbyte. Elle peut également aider à corriger d'autres anomalies de la vision comme l'astigmatisme ou pallier aux aberrations chromatiques.

La demande de brevet européen EP-A-0 064 812 (PILKINGTON) décrit de telles applications, en faisant appel pour la modulation d'indice, au développement d'une couche de gélatine photosensible bichromatée, dans laquelle on enregistre une image latente par photoréduction sous irradiation d'intensité modulée. Ceci provoque localement des durcissements différentiels.

On sait aussi qu'il existe d'autres procédés pour réaliser des réseaux diffractifs sur des supports rigides, par modulation en épaisseur et indice de réfraction de films transparents appliqués sur ces supports, en provoquant une photo-polymérisation locale d'un monomère incorporé à un prépolymère. (voir par exemple EP-A-0353864 et US-A-3809732). On a proposé des procédés de ce type pour réaliser des films guides d'ondes ou des hologrammes.

S'agissant alors de films minces et plats contrairement à la présente invention, les procédés connus impliquent de déposer sur un support rigide une composition liquide comprenant le polymère de base en solution avec le monomère photo-polymérisable, ainsi qu'un photo-initiateur capable de provoquer la polymérisation de ce monomère sous irradiation. On fait ensuite durcir le dépôt en l'exposant à une source d'irradiation modulée en intensité, en puissance ou temps d'exposition, ou à travers un masque de forme appropriée, après quoi on élimine les constituants non durcis, provenant en particulier des zones du film qui n'ont pas été irradiées. Le défaut de stabilité dans le temps des modulations d'indice ainsi obtenues a conduit parfois à préconiser en outre une réaction chimique permettant de fixer le monomère sur le polymère pour éviter une diffusion trop facile détruisant les modulations d'indice. Dans le même but, on a aussi utilisé des supports en verre de silice poreux.

Quand on cherche à appliquer ces techniques au domaine des lentilles ophtalmiques, il est naturellement impératif que les modulations d'indice réalisées restent stables dans le temps et soient insensibles au milieu oculaire. De plus, il se pose un autre problème qui n'existe pas dans le cas des films antérieurs, ce problème étant lié au besoin de respecter une géométrie déterminée pour la lentille.

De fait, les techniques de sérigraphie par photosensibilisation appliquées dans cet art antérieur ne sont en aucun cas directement transposables à la modulation d'indice d'un polymère à utiliser en lentille optique artificielle dans l'oeil, dans la mesure où elles n'avaient pas à se prêter aux mêmes exigences de stabilité géométrique et de qualité et biocompatibilité de toute leur surface.

Et quand certains, comme les auteurs du brevet américain US 4 778 256, ont cherché à traiter des objets, et non plus des films sur support, il s'agissait d'une variation en profondeur, et non parallèlement à la surface comme le demandent les lentilles visées par la présente invention. De plus les objets traités étaient dans ce cas en verre de silice poreux.

D'autres auteurs ont proposé de réaliser des guides d'ondes par polymérisation sélective, à travers un masque, d'un monomère introduit dans une matrice de polycarbonate contenant un photo-initiateur. Mais là encore, cette matrice était sous forme d'un film mince, plat, en polymère rigide, et elle contenait le photo-initiateur préalablement à la diffusion du monomère photopolymérisable en son sein. Par ailleurs, non pas pour un réseau diffractif, mais pour réaliser la variation d'indice d'une lentille, le document de brevet japonais 61 053031 a envisagé l'emploi d'un masque fixe de transparence variable pour irradier un matériau organique

photopolymérisable disposé en film à faces parallèles.

A ce stade de l'art antérieur, il apparaissait alors encore impossible de traiter de manière similaire des polymères sous forme d'articles semi-finis, hors tout support, en répondant aux exigences des lentilles optiques artificielles à usage ophtalmique.

Cependant, par la demande de brevet français n° 89 06323 (publiée sous le numéro 2 646 930), dont le contenu a été repris dans la demande de brevet internationale WO 90/13832, cité en vertu de l'article 54(3) CBE et déposée le même jour que la demande de brevet français dont la priorité est ici revendiquée, la demanderesse a proposé un procédé consistant à imprégner un polymère biocompatible d'une composition photopolymérisable et à la polymériser localement par irradiation au travers d'un masque. Ce procédé permet de créer un élément diffractif au sein même d'une lentille de polymère réticulé, pour lentille de contact ou implant oculaire, et il est applicable aux hydrogels, en utilisant préférentiellement une composition photopolymérisable exempte de solvant contenant au moins un monomère conduisant à un polymère biocompatible et un photoinitiateur approprié.

La même technique peut également servir à réaliser d'autres types de modulations, par irradiation à travers un masque tournant, comme décrit dans un autre brevet français de la demanderesse déposé sous le numéro 90 00 679 (voir EP-A-0 439 394, cité en vertu de l'article 54(3) CBE).

Mais l'expérience a montré que ce procédé entraînait encore quelques déformations de surface de la lentille, moins gênantes toutefois que dans les techniques antérieures, dans la mesure où il implique une imprégnation du mélange de monomère photopolymérisable et photoinitiateur dans tout le volume de la lentille.

La présente invention permet d'éviter ces inconvénients, grâce au procédé de fabrication d'une lentille optique à modulation d'indice de réfraction défini dans la revendication 1. Suivant ce procédé, partant d'une lentille de polymère hydrophile transparent de type hydrogel, préalablement mise en forme, on imprègne cette lentille d'une composition photopolymérisable comportant au moins un monomère et un photo-initiateur en solution dans un solvant aqueux de gonflement de l'hydrogel, on soumet la lentille imprégnée à une irradiation modulée spatialement en intensité et/ou temps d'irradiation, provoquant une polymérisation sélective locale du monomère, puis on élimine l'excédent de photo-initiateur et monomère non polymérisé par extraction audit solvant.

En conséquence, suivant ce prodédé, la lentille traitée ne se trouve jamais asséchée entre les étapes successives du procédé. Elle reste toujours gonflée par un solvant aqueux. De plus, on a pu constater que les hydrogels pour lentilles à utiliser en milieu ophtalmique, tels que les hydrogels à base de méthacrylate de méthyle (MMA) et de vinylpyrrolidone (NVP) ou d'hydroxyéthyl méthacrylate et de vinylpyrrolidone (HEMA/NVP), ou encore les hydrogels de polyhydroxyéthyl méthacrylate, présentent un réseau macromoléculaire spécifique, qui est très favorable à la bonne répartition et à la stabilité d'un réseau polymère interpénétré formé en son sein par le procédé de modulation d'indice de l'invention.

Dans une forme avantageuse de mise en oeuvre pratique du procédé, la première étape consiste à immerger l'hydrogel, de préférence à l'état déjà hydraté, dans une solution aqueuse de la composition photopolymérisable, pour gonfler le polymère par cette solution en déplaçant l'eau pure qu'il renferme. Cependant, on peut aussi partir d'un hydrogel sec, que l'on sature alors directement par la solution de traitement. En général, les polymères hydrophiles utilisés pour constituer l'hydrogel de base ont des capacités d'absorption d'eau de 30 % à 80 % en volume.

Le monomère présent dans la composition d'imprégnation peut être de même type que ceux qui interviennent dans la fabrication du matériau de base de la lentille, ou de type différent, étant entendu qu'il doit être soluble dans le solvant de gonflement, soit plus particulièrement l'eau, ou du moins soluble dans le système ternaire eau/monomère/photoinitiateur. Dans les deux cas, on a intérêt à choisir un monomère qui, après durcissement de la composition où il est combiné avec le photoinitiateur, conduit à un matériau dont l'indice de réfraction est sensiblement différent de celui du matériau de base de la lentille, celle-ci étant considérée dans ses conditions normales d'utilisation, donc à l'état hydraté à saturation par l'eau.

Conformément à l'invention, on utilise avantageusement un monomère à double liaison éthylénique choisi parmi : les acrylates d'alkyle et méthacrylates d'alkyle ainsi que leurs dérivés, en particulier le méthacrylate de méthyle ; les monomères vinyliques aromatiques et leurs dérivés, par exemple le styrène ; les N-vinyl-lactames et leurs dérivés, préférentiellement la N-vinylpyrrolidone ; les méthacrylates d'hydroxyalkyle tels que l'hydroxyéthyl méthacrylate(HEMA) ou l'hydroxypropyl méthacrylate(HPMA). On choisira cependant de préférence le méthacrylate de méthyle ou d'hydroxy-éthyle ou propyle. Un tel monomère est de préférence complété par un réticulant tel qu'un acrylate difonctionnel, ou plus particulièrement un diméthacrylate d'alkyle, où la chaîne alkyle peut comporter notamment de 1 à 5 atomes de carbone. La quantité de réticulant à utiliser peut être déterminée de manière en elle-même classique en fonction de la nature et de la concentration du ou des monomères à réticuler choisis.

Les monomères cités présentent des degrés de solubilité dans l'eau très variables, et parfois faibles,

comme dans le cas du méthacrylate de méthyle. Mais les lentilles de type hydrogel, de par leur nature, sont capables de concentrer le monomère en leur sein durant l'imprégnation, de sorte que l'on pourra atteindre les concentrations requises en utilisant une quantité suffisante de composition photopolymérisable, reconstituée périodiquement. En alternative, on peut introduire sur les monomères peu ou très peu solubles des groupements qui vont les rendre hydrosolubles sans pour autant altérer leurs autres propriétés. Ainsi, par exemple, à la place du styrène, on peut avantageusement utiliser l'acide styrène sulfonique.

Il est remarquable ici que la lentille ne se trouve pas déformée par le traitement de l'invention, malgré ce que l'on aurait pu attendre de la part de molécules de polyméthacrylate de méthyle, hydrophobes, emprisonnées dans une matrice hydrophile, ou de la part de zones de polyHEMA, qui sont plutôt hydrophiles mais à taux de gonflement de 40 % seulement, dans une matrice MMA/NVP à taux de gonflement de l'ordre de 70 %.

Des exemples de compositions aqueuses utilisables pour gonfler les lentilles conformément à l'invention, comportent avantageusement un monomère constitué par le 2-hydroxyéthyl-méthacrylate (HEMA)ou le 2-hydroxypropyl-méthacrylate (HEMA), en concentration comprise entre 0,5 et 0,9 M dans l'eau, en association avec un réticulant en concentration comprise entre $0,5.10^{-2}$ M et $5.10^{-2}$ M, choisi notamment parmi les composés ci-après : éthylèneglycol diméthacrylate (DMEG) ou triéthylène glycol diméthacrylate (TMEG), en concentration de préférence de l'ordre de $10^{-2}$, allyl méthacrylate, N, N' méthylène diacrylamide, en proportion de l'ordre de $10^{-2}$ M à 2,5 ou $3.10^{-2}$ M respectivement.

Quant au photoinitiateur présent avec le monomère de modulation dans la composition d'imprégnation, ou composition de photosensibilisation, il peut s'agir de tout composé producteur de radicaux libres sous irradiation, que ce soit par lui-même ou par coopération avec un autre composé donneur de protons. C'est dire que les photo-initiateurs utilisés, ou amorceurs de photo-polymérisation, peuvent être aussi bien de type photoclivables que de type photoactivables, avec toutefois une préférence pour ceux qui sont actifs pour amorcer la photopolymérisation du monomère pour des longueurs d'onde d'irradiation se situant dans le domaine du visible ou du proche UV.

Un photo-initiateur photoclivable comporte un ou plusieurs composés qui fonctionnent en générant directement un ou plusieurs radicaux libres amorceurs de polymérisation, tandis qu'un photo-initiateur photoactivable est formé d'un système produisant de tels radicaux par une réaction d'oxydoréduction photo-assistée entre un composé absorbeur de lumière et un donneur d'hydrogène ou d'électrons tous deux présents dans le système. Bien entendu, on peut également utiliser des mélanges des deux types de photo-initiateurs.

Des exemples de composés photoclivables connus en soi sont choisis parmi les dérivés d'alcoxyacétophénone, éthers de benzoïne, phosphine-oxydes, dérivés de benzoyl oxime. Des exemples de photoinitiateurs photoactivables connus comprennent un absorbeur producteur de radicaux libres choisi parmi les benzophénones, benzyles, xanthones, anthrones, thioxanthones, fluorénones, subérones, acridones, en association avec, comme donneur de protons, un composé du type des éthers, alcools, amines, amino-acides, ou composés organométalliques. On pourra notamment utiliser les photoinitiateurs constitués par des thioxanthones portant un radical ionique tels que ceux de la famille décrite dans le brevet américain US 4 791 213, dont le maximum d'absorption se situe dans la gamme de 390 à 405 nanomètres.

En pratique, les photoinitiateurs préférés utilisés dans la mise en oeuvre du procédé de l'invention seront choisis parmi les thioxanthones et les benzophénones porteuses d'un radical alkylamine ou oxy-alkylamine, sous forme de sel d'amine.

Dans une forme avantageuse de mise en oeuvre pratique du procédé, la première étape consiste à immerger l'hydrogel déjà hydraté dans une solution aqueuse de la composition photopolymérisante pour gonfler le polymère par cette solution en déplaçant l'eau pure qu'il enferme. Des photo-initiateurs actifs en faible concentration sont préférés pour cela, car ils permettent d'éviter une variation de l'indice modulé à travers l'épaisseur de la lentille, d'où la préférence donnée suivant l'invention à des mélanges photo-activables où le photo-initiateur proprement dit est associé à un composé donneur de protons.

On évite ainsi l'apparition non souhaitable d'un gradient d'indice en fonction de la profondeur d'irradiation. Suivant l'invention, ce gradient reste dans les limites d'une variation acceptable de 10 à 20 %. La concentration en photoinitiateur dans la solution d'imprégnation est avantageusement comprise entre $10^{-5}$ M et 0,5 M, et notamment de l'ordre de $10^{-2}$ à $10^{-4}$ M, notamment quand il s'agit de thioxanthones solubles par voie aqueuse. En combinaison, on utilise avantageusement comme donneur d'électron, une éthanolamine telle que la méthyldiéthanolamine (MDEA) ou la triéthanolamine (TEA), en concentration de l'ordre de $10^{-2}$ M, soit comprise entre $1.10^{-2}$ et $5.10^{-2}$ M de préférence.

L'irradiation de l'étape suivante peut être réalisée par toute source lumineuse émettant dans le domaine de sensibilité du photoinitiateur utilisé. Il peut s'agir notamment d'une lampe à arc au mercure, pour les compositions de photosensibilisation préférées. Pour limiter l'irradiation aux zones souhaitées, on peut interposer un masque entre la source et le matériau imprégné, ou faire appel à un faisceau laser, ou à des interférences de

faisceaux de lumière cohérente, ou encore utiliser un masque tournant présentant un profil de zones opaques approprié.

Pour éliminer ensuite le monomère non durci et le photoinitiateur non utilisé restant notamment dans les zones n'ayant pas été soumises à l'irradiation, il suffit d'immerger à nouveau les lentilles traitées dans le solvant de gonflement, c'est-à-dire en général dans l'eau pure, pour en extraire les constituants solubles.

L'invention permet en particulier, par impression du polymère gonflé par la solution aqueuse de monomère et photo-initiateur à travers un masque à raies concentriques appropriées, puis développement à l'eau, de réaliser dans une lentille de contact préformée à sa forme définitive, un réseau diffractif convenant pour pallier la presbytie, sans provoquer d'altération physiques gênantes de la lentille, ne serait-ce qu'en surface. Ceci peut se faire sans perturber le fonctionnement normal d'additifs tels que les agents anti-UV ou les colorants. L'invention permet de contrôler la modulation d'indice de façon homogène dans l'épaisseur. Ainsi, on peut réaliser un élément diffractif en ajustant l'énergie diffractée dans la puissance souhaitée.

Le traitement pour ce faire comporte un faible nombre d'étapes et il est simple à mettre en oeuvre de telle sorte que les raies d'indices différents soient constituées au sein de la matrice sans se traduire par des traits en déformation de la surface, les surépaisseurs éventuelles n'étant guère par exemple que de l'ordre de 1 à 2 microns. De telles raies sont bien délimitées et elles restent telles dans le temps. Elles ont en général une finesse de l'ordre de 500 à 10 μm

En général, les lentilles de contact à traiter ont une épaisseur comprise entre 100 et 500 microns, mais cette épaisseur varie de l'axe à la périphérie. Le rayon de courbure de la lentille gonflée dans sa forme d'emploi est en général de l'ordre de 6 à 10 pour la face avant et de l'ordre de 7 à 9 pour la face arrière.

Pour un diamètre total de la lentille de 10 mm environ, le réseau diffractif obtenu suivant l'invention occupe la zone centrale, sur un diamètre de l'ordre de 4 à 6 mm, avec une profondeur s'étendant à toute l'épaisseur de la lentille, donc de l'ordre de 200 μm au centre et de l'ordre de 300 à 400 μm en bord de la zone. Les raies concentriques sont écartées de 0,5 à 1 mm au centre et se rapprochent progressivement quand on s'éloigne radialement du centre pour atteindre un écartement de 50 à 100 μm en bord de zone.

La technique à masque tournant telle que décrits dans la demande de brevet français 90 00679 (voir aussi EP-A-0 439 394 cité en vertu de l'article 54(3) CBE) est également utilisable pour réaliser de tels éléments diffractifs au sein de lentilles en hydrogel, de même que l'emploi d'un masque fixe ou de toute autre méthode de modulation spatiale de la source d'irradiation en intensité et/ou temps d'irradiation peut servir à réaliser un élément asphérique tels que ceux décrits dans ladite demande de brevet français avec la puissance et le gradient de puissance souhaité.

Toutefois, on a pu constater que la technique de l'irradiation à travers un masque tournant présente des avantages spécifiques quand elle est utilisée dans le procédé de l'invention, pour traiter une lentille ophtalmique en hydrogel transparent, conformée pour présenter déjà un certain profil de puissance, gonflée par une solution de composition photopolymérisable. Ceci se vérifie en particulier dans les applications de l'invention qui consistent à conférer à la lentille un profil de puissance différent du profil d'origine, par une modulation spatiale de l'indice de réfraction qui peut se conjuguer avec une modulation d'épaisseur restant suffisamment faible pour ne pas modifier sensiblement la géométrie générale d'origine de la lentille. Il s'agit alors, contrairement au cas des éléments diffractifs, de réaliser une modulation continue où la modification de l'indice de réfraction varie progressivement parallèlement à la surface extérieure de la lentille.

Plus facilement qu'un masque statique qui devrait comporter des zones à dégradés de transparence, le masque tournant permet de régler radialement la variation de flux d'énergie parvenant à la surface de la lentille, quand il présente à cet effet, par exemple, des secteurs alternativement opaques et transparents dont la largeur angulaire varie entre le centre et la périphérie de la lentille. La modulation d'indice résultant de la photopolymérisation ajoute alors une modulation de puissance optique au profil de puissance d'origine, ceci étant particulièrement utile par exemple pour obtenir à partir d'une lentille d'origine éventuellement à puissance sphérique, une asphérisation complémentaire comme le demandent les lentilles de correction de la presbytie.

Grâce au masque tournant, il est aussi possible d'obtenir un profil de puissance correcteur de l'astigmatisme, par une modulation de la vitesse de rotation angulaire du masque suivant la position angulaire instantanée des zones opaques. Les variations de vitesse à imposer au masque sont alors calculées en fonction des caractéristiques du profil de puissance astigmate à obtenir. Et bien entendu, on peut combiner des formes de zones opaques et transparentes déterminées pour l'asphérisation avec une modulation de vitesse de rotation du masque.

Dans la mise en oeuvre pratique de l'invention, l'asphérisation d'une lentille peut être obtenue aussi bien par des secteurs alternativement opaques et transparents comme on l'a mentionné ci-dessus (à condition que ces secteurs ne soient pas délimités par un rayon rectiligne, mais par des lignes courbes) que par une variation de la largeur radiale des zones faiant tout le tour du masque suivant une courbe déterminée en fonction de la loi de phase à obtenir, exprimée par la longueur d'ondes correspondant à la sensibilité phototopique maximale

de l'oeil. D'une manière générale il s'agit de réaliser ainsi, par variation du flux d'énergie de photopolymérisation reçu au cours de la rotation du masque, des puissances optiques présentant une différence de 0,5 à 3,5 dioptries sur une distance radiale de l'ordre de 2 mm, ce qui peut être obtenu conformément à l'invention par une variation de temps d'exposition dans un rapport de 10 à 70 s.

Dans le cas d'une lentille de puissance nulle à l'origine, la zone transparente du masque partira d'un rayon de référence où elle s'étend sur toute la distance radiale, pour revenir à ce rayon de référence effilée en pointe à la périphérie. Si la lentille présente une puissance sphérique d'origine non nulle, cette zone transparente viendra mourir sur le rayon de référence en un point intermédiaire, de manière à ménager une autre zone opaque en périphérie. Bien que cela ait l'inconvénient de conduire à des formes de masques plus complexes, on peut prévoir une réduction de la loi de phase modulo 2 $\pi$ conduisant à ménager deux zones transparentes dont les formes tout autour du masque se correspondent par transformation homothétique.

Quand on désire corriger simultanément l'astigmatisme, il est facile d'obtenir une lentille de puissance sphérotorique présentant des profils de puissance différents suivant deux axes non confondus, généralement orthogonaux, en appliquant une modulation de la vitesse angulaire de rotation, caractérisée par sa valeur au passage du rayon de référence sur chacun desdits axes.

Pour plus de précisions, les calculs utiles pour déterminer la forme du masque et les conditions d'entraînement en rotation sont à la portée de l'homme de l'art, qui pourra se référer par exemple pour cela à la demande de brevet français enregistrée sous le numéro 90 00679 (voir aussi EP-A-0 439 394, cité en vertu de l'article 54(3) CBE).

On décrira maintenant l'invention plus en détails dans le cadre d'exemples particuliers de mise en oeuvre qui ne sont nullement limitatifs.

**EXEMPLE 1 :**

La base photopolymérisable d'imprégnation est constituée d'un mélange d'hydroxyéthyl méthacrylate (HEMA) et d'un réticulant acrylate difonctionnel : le diméthyl-méthacrylate d'éthylène glycol (DMEG) en solution dans l'eau distillée.

Le polymère de base est un copolymère de méthacrylate de méthyle et N-vinylpyrrolidone (MMA-NVP) du type commercialisé par ESSILOR sous la marque LUNELLE. Il se présente en échantillons semi-finis, sous la forme de lentilles optiques de 13 à 14 mm de diamètre.

Le système photo-initiateur est constitué d'une thioxanthone hydrosoluble, commercialisée par International Biosynthetics sous le nom de QUANTACURE (QTX), absorbant à 405 nm dans l'eau, de formule :

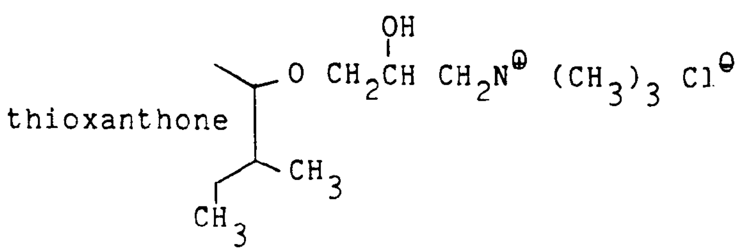

et d'une amine tertiaire, la méthyl diéthanolamine (MDEA).

La composition aqueuse d'imprégnation est formée du mélange de la base polymérisable et du système photo-initiateur. Les plages de concentration utilisées sont dans les limites suivantes :

Concentration en QTX : $10^{-5}$ M à 0,5 M
Concentration en MDEA supérieure à 1,7 x $10^{-2}$ M
Concentration en HEMA comprise entre 0,6 M et 1 M
Concentration en DMEG de l'ordre de $10^{-2}$ M

Le système d'irradiation est constitué d'une lampe à arc de mercure haute pression présentant une puissance de 100 W, collimatée par une lentille de 200 mm de distance focale. La densité de flux mesurée pour les raies d'émission à 405-408 nm vaut 0,75 mW/cm$^2$ au niveau de l'échantillon de polymère.

On sélectionne au niveau de la lampe les raies visibles du mercure.

La lentille est mise à gonfler dans la composition comprenant le photo-initiateur et la base polymérisante pendant au moins 30 minutes à température ambiante.

Pour les concentrations suivantes :

QTX = $10^{-4}$ M
MDEA = 1,8 x $10^{-2}$ M

HEMA = 0,7 M
DMEG = $10^{-2}$ M

on obtient, après 3 minutes d'insolation, une variation d'indice de 5 x $10^{-3}$ pour une lentille de 200 μm d'épaisseur et une résolution d'au moins 20 μm.

Cette variation d'indice permet, entre autres, de réaliser des lentilles diffractives kinoformes bifocales par variation d'indice à travers un masque tournant adapté.

Pour les concentrations suivantes :

QTX = 5 x $10^{-4}$ M
MDEA = 1,8 x $10^{-2}$ M
HEMA = 0,7 M
DMEG = $10^{-2}$ M

on obtient après 3 minutes d'insolation une variation d'indice de 8 x $10^{-3}$ pour une lentille de 200 μm d'épaisseur.

Cette variation d'indice permet de réaliser des lentilles asphériques telles que celles décrites dans la demande de brevet français n° 90 00679 (voir aussi EP-A-0 439 394, cité en vertu de l'article 54(3) CBE) avec une puissance de 1,5 et 2 dioptries d'addition.

Pour les concentrations suivantes :

QTX = $10^{-3}$ M
MDEA = 1,8 x $10^{-2}$ M
HEMA = 0,7 M
DMEG = $10^{-2}$ M

on obtient après 3 minutes d'insolation une variation d'indice de $10^{-2}$ pour une lentille de 200 μm d'épaisseur.

Cette variation d'indice permet de réaliser des lentilles asphériques pour une addition de 2,5 dioptries.

**EXEMPLE 2 :**

On remplace le QTX par une autre thioxanthone qui a pour formule :

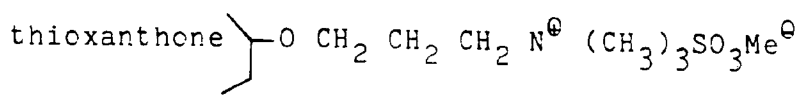

Pour des concentrations identiques à celles citées dans l'exemple 1, les résultats sont comparables.

Soumises à des tests de vieillissement dans le sérum physiologique à 60 °C pendant un mois, les lentilles ont conservé une efficacité de diffraction inchangée.

**EXEMPLE 3 :**

On remplace la thioxanthone par une benzophénone hydrosoluble, connue sous la dénomination QUANTACURE BTC et développée par International Biosynthetics, présentant la formule suivante :

benzophénone para- $CH_2N^{\oplus}$ $(CH_3)$ $Cl^{\ominus}$

L'irradiation se fait dans l'UV à 365 nm, correspondant au domaine de sensibilité de la thioxanthone.

On réalise la photopolymérisation en utilisant, pour imprégner le polymère de base, un mélange présentant les concentrations suivantes :

QTX BTC = $10^{-3}$ M
MDEA = 1,8 x $10^{-2}$ M
HEMA = 0,7 M
DMEG = $10^{-2}$ M

**EXEMPLE 4 :**

On utilise la triéthanolamine (TEA) à la place de la méthyl diéthanolamine, en tant qu'activateur photosensible de décomposition du photoinitiateur.

Le mélange de sensibilisation a la composition suivante, exprimée en concentration des constituants dans l'eau :

QTX = $10^{-3}$ M
TEA = $10^{-2}$ M

HEMA = 0,7 M
DMEG = $10^{-2}$ M
On obtient une photopolymérisation qui permet de réaliser une lentille diffractive.

**EXEMPLE 5 :**

On utilise la méthyl diéthanolamine et on remplace le QTX par une autre thioxanthone développée par International Biosynthetics sous la dénomination QUANTACURE ABC, de formule :

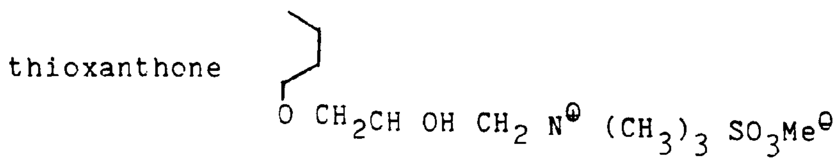

Pour 3 minutes d'insolation on obtient une modulation d'indice de 7,5 x $10^{-3}$ pour les concentrations suivantes :
Quantacure ABC = $10^{-3}$ M
MDEA = 1,8 x $10^{-2}$ M
HEMA = 0,7 M
DMEG = $10^{-2}$ M

**EXEMPLE 6 :**

Cet exemple concerne une formulation optimisée pour l'obtention de lentilles à profil de puissance variable.

La composition photopolymérisable est une solution aqueuse contenant :

| | | |
|---|---|---|
| thioxanthone | HTX | 5 x $10^{-3}$M |
| | MDEA | 1,2 x $10^{-2}$M |
| | DMEG | $10^{-2}$ M |
| | HEMA | 0,7 M |

La thioxanthone HTX a pour formule :

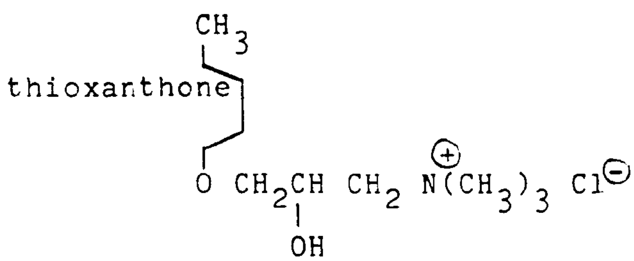

Une lentille de contact de type ci-dessus, connu sous la dénomination LUNELLE, sphérique à l'état hydraté, est plongée dans la solution aqueuse ci-dessus pendant une durée variant de 15 à 45 mn, de préférence de l'ordre de 30 mn.

On retire ensuite la lentille de la solution aqueuse et on la place sur un support.

La lentille est alors irradiée à travers un masque tournant du type de celui représenté en figure 1, constitué par un disque circulaire transparent 2 comportant deux zones opaques 1 symétriques à renflement à partir du centre et effilées vers la périphérie.

Le flux d'irradiation est de 1,5 mW/cm2 à une longueur d'onde de 410 nm.

Un tel masque permet d'obtenir une lentille de contact asphérique pour la correction de la presbytie. La lentille obtenue ne présente pas un saut de puissance, comme le ferait une lentille bifocale, mais un continuum.

De manière générale, la forme du masque est déterminée par le profil de puissance spécifique qu'on souhaite créer. Des profils de puissance optimisés pour la correction de la presbytie sont décrits dans la demande de brevet français FR 89 01417 au nom de la demanderesse, publiée le 10 août 1990 (voir aussi EP-A-0 381 567, cité en vertu de l'article 54(3) CBE).

Le tableau ci-après illustre, en fonction du temps d'irradiation, l'addition obtenue, c'est-à-dire la différence des puissances entre la vision de près (VP) et la vision de loin (VL).

L'addition est mesurée à l'aide d'un fronto-interféromètre à différence de phase.

| temps d'exposition (secondes) | 20 | 25 | 30 | 40 |
|---|---|---|---|---|
| Addition (en dioptries) | 1,5 | 2 | 2,5 | 3 |

Il est possible d'obtenir toute la gamme d'addition usuelle sans dépasser 60 à 70 s de temps de pause.

Naturellement, l'invention n'est en rien limitée par les particularités qui ont été spécifiées dans les exemples qui précèdent ou par les détails des modes de mise en oeuvre particuliers choisis pour illustrer l'invention. Toutes sortes de variantes peuvent être apportées aux conditions opératoires de même qu'à la nature et aux proportions des constituants et réactifs sans sortir pour autant du cadre de l'invention.

**Revendications**

1. Procédé de fabrication d'une lentille optique à modulation d'indice de réfraction suivant lequel on ajoute un profil de puissance modulé spatialement au profil de puissance d'origine d'une lentille de polymère hydrophile transparent de type hydrogel en imprégnant cette lentille, préalablement mise en forme, d'une composition photo-polymérisable comportant au moins un monomère et un photo-initiateur en solution dans un solvant aqueux de gonflement de la lentille, en soumettant la lentille imprégnée à une irradiation modulée spatialement en intensité et/ou temps d'irradiation, provoquant une polymérisation sélective locale du monomère, puis en éliminant l'excédent de photo-initiateur et monomère non polymérisé par extraction audit solvant.

2. Procédé suivant la revendication 1, dans lequel ledit profil de puissance modulé spatialement est ajouté audit profil de puissance d'origine de ladite lentille opthalmique en hydrogel transparent par modification continue de l'indice de réfraction parallèlement à la surface extérieure de la lentille.

3. Procédé suivant la revendication 1 ou 2, dans lequel l'imprégnation de la lentille est réalisée sensiblement à saturation par une solution aqueuse dudit monomère et dudit photo-initiateur contenant en outre un composé réticulant dudit monomère.

4. Procédé suivant la revendication 1 ou 2, dans lequel le polymère de base de la lentille est choisi parmi les hydrogels de méthacrylate de méthyle et vinylpyrrolidone ou de polyhydroxyéthyl méthacrylate réticulé, ou encore d'hydroxyéthyl méthacrylate et de vinylpyrrolidone.

5. Procédé suivant l'une quelconque des revendications précédentes, dans lequel la composition photopolymérisable est une solution aqueuse comportant un monomère du type méthacrylate de méthyle ou hydroxyméthyl ou hydroxypropyl méthacrylate, en concentration de l'ordre de 0,5 à 0,9 M.

6. Procédé suivant l'une quelconque des revendications précédentes, dans lequel ladite solution comporte en outre un réticulant dudit monomère, constitué notamment par un méthacrylate polyfonctionnel tel que l'éthylène glycol diméthacrylate ou le triéthylène glycol méthacrylate, ou par l'allyl méthacrylate ou le N, N' méthylène diacrylamide, en concentration comprise entre $0,5.10^{-2}$ M et $5.10^{-2}$ M.

7. Procédé suivant l'une quelconque des revendications précédentes, dans lequel le photoinitiateur comprend un composé photosensible soluble dans l'eau de la famille des thioxanthones.

8. Procédé suivant l'une quelconque des revendications précédentes, dans lequel la concentration de la solution d'imprégnation en photoinitiateur est comprise entre $10^{-5}$ M et 0,5 M.

9. Procédé suivant l'une quelconque des revendications précédentes, dans lequel la concentration de la solution d'imprégnation en photoinitiateur est de l'ordre de $10^{-2}$ M à $10^{-4}$ M.

10. Procédé suivant l'une quelconque des revendications précédentes, dans lequel la solution d'imprégnation comporte un activateur de décomposition photosensible du photoinitiateur de polymérisation.

11. Procédé suivant la revendication 11, dans lequel ledit activateur est présent dans la solution en concentration de l'ordre de 1 à 5 .$10^{-2}$ M.

12. Procédé suivant l'une quelconque des revendications précédentes, dans lequel l'irradiation est effectuée sous une longueur d'onde du domaine visible ou du proche UV.

13. Procédé suivant l'une quelconque des revendications précédentes, dans lequel l'irradiation s'effectue à travers un masque à raies concentriques propre à la création d'un réseau diffractif au sein de la lentille.

14. Procédé suivant l'une quelconque des revendications précédentes, dans lequel l'irradiation s'effectue à travers un masque (1,2) entraîné en rotation sur lui-même.

15. Procédé suivant la revendication 14, dans lequel ledit masque présente des zones en secteurs alternativement opaques (1) et transparentes (2) propres à ajouter un profil de puissance modulée de manière continue spatialement au profil de puissance d'origine de la lentille ophtalmique, notamment pour obtenir par la modulation d'indice une puissance d'asphérisation convenant par exemple à la correction de la presbytie.

16. Procédé suivant la revendication 14 ou 15, dans lequel pendant l'irradiation ledit masque (1,2) est entraîné en rotation à une vitesse angulaire variant en fonction de sa position angulaire instantanée, notamment afin de réaliser par la modulation d'indice une modulation de puissance de la lentille lui conférant un profil de puissance correcteur de l'astigmatisme.

17. Procédé suivant l'une quelconque des revendications précédentes, dans lequel ladite lentille optique est une lentille de contact ou un implant oculaire.

## Patentansprüche

1. Verfahren zur Herstellung einer optischen Linse mit Modulation des Brechungsindex, bei dem einem ursprünglichen Brechkraftprofil einer Linse aus hydrophilen durchsichtigen Polymer vom Hydrogeltyp ein raummoduliertes Brechkraftprofil hinzugefügt wird, wobei diese Linse, die zuvor geformt wurde, mit einer photopolymerisierbaren Zusammensetzung imprägniert wird, die mindestens ein Monomer und einen Photoinitiator in Lösung in einem wäßrigen Lösungsmittel zum Aufquellen der Linse umfaßt, wobei die imprägnierte Linse einer raummodulierten Bestrahlung mit einer Bestrahlungsintensität und/oder für eine Bestrahlungsdauer ausgesetzt wird, um eine selektive lokale Polymerisation des Monomers auszulösen, und dann der Überschuß an Photoinitiator und nicht polymerisiertem Monomer durch Extraktion mit dem Lösungsmittel entfernt wird.

2. Verfahren nach Anspruch 1, bei dem das raummodulierte Brechkraftprofil dem ursprünglichen Brechkraftprofil der Augenlinse aus durchsichtigem Hydrogel hinzugefügt ist, indem kontinuierlich der Brechungsindex parallel zur äußeren Oberfläche der Linse modifiziert wird.

3. Verfahren nach Anspruch 1 oder 2, bei dem die Imprägnierung der Linse genau an der Sättigung mit einer wäßrigen Lösung des Monomers und des Photoinitiators durchgeführt wird, die außerdem eine Zusammensetzung zur Vernetzung des Monomers enthält.

4. Verfahren nach Anspruch 1 oder 2, bei dem das Grundpolymer der Linse ausgewählt ist aus Hydrogelen von Methylmethacrylat und Vinylpyrrolidon oder vernetztem Polyhydroxyethylmethacrylat oder auch von Hydroxyethylmethacrylat und Vinylpyrrolidon.

5. Verfahren nach einem der vorhergehenden Ansprüche, bei dem die photopolymerisierbare Zusammensetzung eine wäßrige Lösung ist, die ein Monomer vom Methylmethacrylattyp oder Hydroxymethyl- oder Hydroxypropylmethacrylattyp in einer Konzentration im Bereich von 0,5 bis 0,9 M umfaßt.

6. Verfahren nach einem der vorhergehenden Ansprüche, bei dem die Lösung außerdem ein Vernetzungsmittel für das Monomer umfaßt, das insbesondere aus einem polyfunktionalen Methacrylat, wie Ethylenglykoldimethacrylat oder Triethylenglykolmethacrylat oder Allylmethacrylat oder N,N'-Methylendiacrylamid, in einer Konzentration zwischen $0{,}5 \cdot 10^{-2}$ und $5 \cdot 10^{-2}$ M zusammengesetzt ist.

7. Verfahren nach einem der vorhergehenden Ansprüche, bei dem der Photoinitiator eine wasserlösliche lichtempfindliche Substanz aus der Klasse der Thioxanthone umfaßt.

8. Verfahren nach einem der vorhergehenden Ansprüche, bei dem die Konzentration des Photoinitiators in der Imprägnierlösung zwischen $10^{-5}$ M und 0,5 M liegt.

9. Verfahren nach einem der vorhergehenden Ansprüche, bei dem die Konzentration des Photoinitiators in der Imprägnierlösung im Bereich von $10^{-2}$ M bis $10^{-4}$ M liegt.

10. Verfahren nach einem der vorhergehenden Ansprüche, bei dem die Imprägnierlösung einen Aktivator für die lichtbedingte Zersetzung des Photoinitiators für die Polymerisation umfaßt.

11. Verfahren nach Anspruch 10, bei dem der Aktivator in der Lösung in einer Konzentration im Bereich von 1 bis $5 \cdot 10^{-2}$ M vorhanden ist.

12. Verfahren nach einem der vorhergehenden Ansprüche, bei dem die Bestrahlung mit einer Wellenlänge im sichtbaren Bereich oder im nahen Ultraviolettbereich durchgeführt wird.

13. Verfahren nach einem der vorhergehenden Ansprüche, bei dem die Bestrahlung durch eine Maske mit konzentrischen Linien hindurch erfolgt, die zur Erzeugung eines Beugungsgitters innerhalb der Linse geeignet ist.

14. Verfahren nach einem der vorhergehenden Ansprüche, bei dem die Bestrahlung durch eine Maske (1,2) hindurch erfolgt, die zur Rotation um sich selbst gebracht ist.

15. Verfahren nach Anspruch 14, bei dem die Maske Zonen mit alternierenden undurchlässigen (1) und durchsichtigen (2) Abschnitten aufweist, die dem ursprünglichen Brechkraftprofil ein kontinuierliches räumlich modulierendes Brechkraftprofil hinzufügen: dem ursprünglichen Brechkraftprofil der Augenlinse wird, insbesondere um die Modulation des Index zu erhalten, ein nicht sphärisches Profil hinzugefügt, um beispielsweise die Weitsichtigkeit zu korrigieren.

16. Verfahren nach Anspruch 14 oder 15, bei dem während der Bestrahlung die Maske (1,2) mit einer als Funktion ihrer momentanen Winkelposition variierenden Winkelgeschwindigkeit in Rotation versetzt wird, insbesondere um mit der Modulation des Index eine Brechkraftmodulation der Linse zu erzeugen, die ihr ein Brechkraftprofil zum Korrigieren des Astigmatismus verleiht.

17. Verfahren nach einem der vorhergehenden Ansprüche, bei dem die optische Linse eine Kontaktlinse oder eine Augenimplantationslinse ist.

## Claims

1. Method of manufacturing an optical lens providing refractive index modulation, wherein a spatially modulated power profile is added to the original power profile of a lens made of transparent hydrophilic polymer of the hydrogel type by impregnating this previously shaped lens with a photopolymerizable composition containing at least one monomer and one photoinitiator in solution in an aqueous solvent which causes swelling of the lens, by subjecting the impregnated lens to an irradiation which is spatially modulated in irradiation intensity and/or in irradiation time, thus producing a local selective polymerization of the monomer, and by then eliminating the excess quantity of photoinitiator and non-polymerized monomer by solvent extraction.

2. Method according to claim 1, wherein said spatially modulated power profile is added to the original power profile of said ophthalmic lens made of transparent hydrogel by a continuous modification of the refractive index, parallelly to the external surface of the lens.

3. Method according to claim 1 or 2, wherein the impregnation of the lens is carried out substantially to saturation by an aqueous solution of said monomer and of said photoinitiator which contains in addition a

compound for cross-linking said monomer.

**4.** Method according to claim 1 or 2, wherein the basic polymer of the lens is selected from the hydrogels of methyl methacrylate and vinylpyrrolidone or of cross-linked polyhydroxyethyl methacrylate or else of hydroxyethyl methacrylate and of vinylpyrrolidone.

**5.** Method according to any of the preceding claims, wherein the photopolymerizable composition is an aqueous solution containing a monomer such as methyl methacrylate, or hydroxymethyl or hydroxypropyl methacrylate, at a concentration of the order of 0.5 to 0.9 M.

**6.** Method according to any of the preceding claims, wherein a cross-linking agent for said monomer is included in said solution and consists in particular of a polyfunctional methacrylate such as ethyleneglycol dimethacrylate or triethyleneglycol methacrylate, or of the allyl methacrylate, or the N-N′ methylene diacrylamide, at a concentration within the range of 0.5 x $10^{-2}$ M to 5 x $10^{-2}$ M.

**7.** Method according to any of the preceding claims, wherein the photoinitiator contains a water-soluble photosensitive compound of the thioxanthone family.

**8.** Method according to any of the preceding claims, wherein the concentration of photoinitiator in the impregnation solution is within the range of $10^{-5}$ M to 0.5 M.

**9.** Method according to any of the preceding claims, wherein the concentration of photoinitiator in the impregnation solution is of the order of $10^{-2}$ M to $10^{-4}$ M.

**10.** Method according to any of the preceding claims, wherein the impregnation solution contains an activator for photosensitive decomposition of the polymerization photoinitiator.

**11.** Method according to claim 11, wherein said activator is present in the solution at a concentration of the order of 1 to 5 x $10^{-2}$ M.

**12.** Method according to any of the preceding claims, wherein irradiation is carried out at a wavelength of the visible region or of the near-ultraviolet region.

**13.** Method according to any of the preceding claims, wherein irradiation is carried out through a mask having concentric lines and suited for the creation of a diffraction grating within the lens.

**14.** Method according to any of the preceding claims, wherein irradiation is carried out through a mask (1, 2) which is driven in rotation about its own axis.

**15.** Method according to claim 14, wherein said mask has zones in the form of alternately opaque (1) and transparent (2) sectors which are capable of adding power profile, spatially modulated in a continuous manner, to the original power profile of the ophthalmic lens, especially in order to obtain, by the refractive index modulation, an aspherization power which for example is suited to correction of presbyopia.

**16.** Method according to claim 14 or claim 15, wherein, during irradiation, said mask (1, 2) is driven in rotation at an angular velocity which varies as a function of its instantaneous angular position, especially in order to achieve, by means of refractive index modulation, a lens power modulation which endows the lens with an astigmatism-correcting power profile.

**17.** Method according to any of the preceding claims, wherein said optical lens is a contact lens or ocular implant.

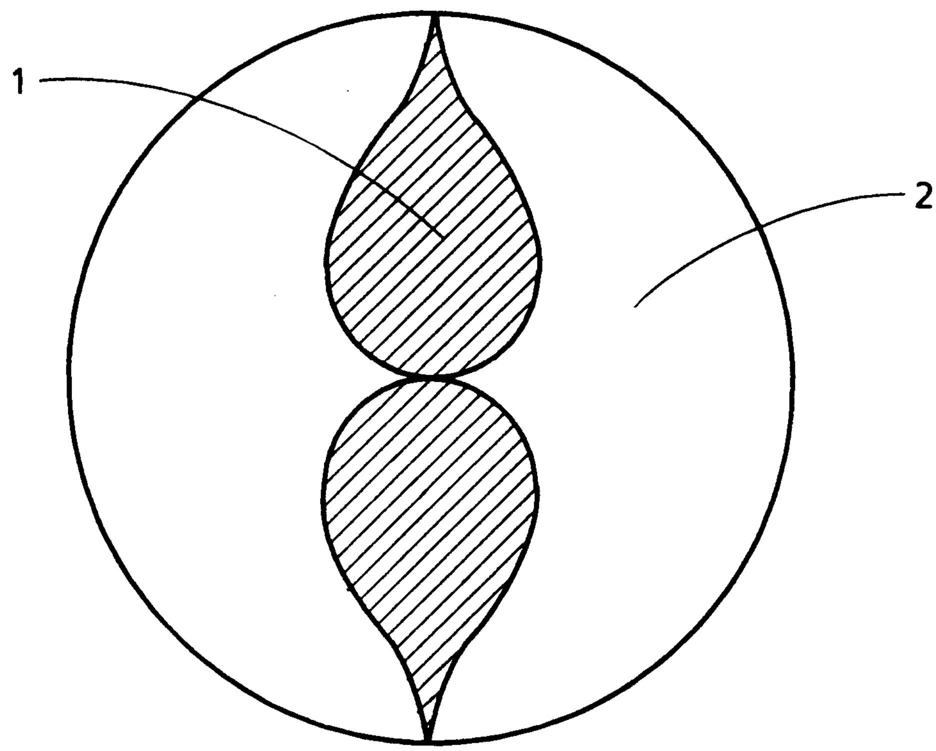


Fig. 1